# EUROPÄISCHE PATENTSCHRIFT

(11) **EP 4 392 310 B1**
(45) Veröffentlichungstag und Bekanntmachung des Hinweises auf die Patenterteilung: **04.06.2025**
(21) Anmeldenummer: 22757947.1
(22) Anmeldetag: 28.07.2022
(51) Int. Cl.: B62D 15/02, B62D 11/08, G05D 1/20, B60W 30/06, G08G 1/16, B60T 8/17

(54) **VERFAHREN ZUM STEUERN EINES FAHRZEUGES AUF EINEM GESCHLOSSENEN GELÄNDE, STEUEREINHEIT UND FAHRZEUG**
METHOD FOR CONTROLLING A VEHICLE WITHIN A CONFINED SITE, CONTROL UNIT AND VEHICLE
PROCÉDÉ POUR COMMANDER UN VÉHICULE À L'INTÉRIEUR D'UN SITE CONFINÉ, UNITÉ DE COMMANDE ET VÉHICULE

(30) Priorität: 26.08.2021 DE 102021122051
(43) Veröffentlichungstag der Anmeldung: 03.07.2024
(73) Patentinhaber: ZF CV Systems Global GmbH, 3006 Bern (CH)
(72) Erfinder: LÜLFING, Ralph-Carsten, 30826 Garbsen (DE); PLÄHN, Klaus, 30926 Seelze (DE); RICKE, Janik, 31311 Uetze (DE)
(74) Vertreter: Rabe, Dirk-Heinrich
(86) Internationale Anmeldenummer: PCT/EP2022/071236
(87) Internationale Veröffentlichungsnummer: WO 2023/025509

(56) Entgegenhaltungen:
- EP-A1- 2 998 175
- DE-A1- 102016 116 857
- DE-A1- 102019 108 620

## Beschreibung

Die Erfindung betrifft ein Verfahren zum Steuern eines Fahrzeuges, insbesondere Nutzfahrzeuges, auf einem geschlossenen Gelände, insbesondere einem Betriebshof, eine Steuereinheit zur Durchführung des Verfahrens sowie ein Fahrzeug.

Fahrzeuge, insbesondere Nutzfahrzeuge, die über kein aktives automatisiertes Lenksystem verfügen, können in einen autonom geführten Betriebshof bzw. Speditionshof als geschlossenes Gelände nur bedingt eingebunden werden, da sie einem vorgegebenen Pfad von einem Startbereich in einen Zielbereich nicht vollautomatisiert folgen können. Dies ist nur dann möglich, wenn ein Fahrer oder Bedienpersonal die Fahrfunktion, insbesondere die Lenkfunktion, übernimmt, was bedeutet, dass mehr Personal als notwendig bzw. gewollt auf dem Betriebshof eingebunden ist. Dies ist bei autonom operierenden Fahrzeugen bzw. Betriebshöfen jedoch unerwünscht. Das Nachrüsten eines aktiven automatisierten Lenksystems ist zudem teuer.

Aus dem Stand der Technik ist bekannt, eine Lenkfunktion durch eine radindividuelle Ansteuerung von Betriebsbremsen umzusetzen (Lenkbremsen). In DE 10 2012 104 793 A1, DE 196 32 251 A1, EP 2 998 175 A1 und DE 10 2006 046 497 A1 ist diesbezüglich beispielsweise beschrieben, die Lenkung eines Fahrzeuges sicherzustellen, indem die Lenkbremsung als redundante Rückfallebene verwendet wird. Weitere Lenkbremsfunktionen sind in DE 10 2017 102 021 A1 und DE 10 2019 108 620 A1 beschrieben.

In EP 3 293 064 A1 und EP 3 293 065 A1 ist zudem vorgesehen, über ein Umschaltmodul zwischen einer Lenkung über ein automatisiertes Lenksystem und einer Lenkung per Lenkbremsung hin und her zu schalten, wobei durch die jeweilige Lenkung bei der Durchführung von autonomen Fahrmanövern im Rahmen einer Spurhalte- oder Spurwechsel-Assistenz automatische Korrekturen durchgeführt werden sollen.

Die DE102016116857A1 offenbart ein System zum Operieren eines fahrerlosen Nutzfahrzeugs in einem eingeschränkten Bereich, wobei der eingeschränkte Bereich eine Einfahrt, eine Ausfahrt und einen vorbestimmten Zielpunkt aufweist. Das System umfasst ein Übergabemodul zum Übergeben der Kontrolle über das Nutzfahrzeug an der Einfahrt von dem Fahrer des Nutzfahrzeuges an das System, und an der Ausfahrt und weiter von dem System an den Fahrer des Nutzfahrzeuges. Das System umfasst außerdem ein Bewegungsmodul zum autonomen Bewegen des Nutzfahrzeuges von der Einfahrt zu dem vorbestimmten Zielpunkt und von dem vorbestimmten Zielpunkt zu der Ausfahrt und ein Durchführungsmodul zum autonomen Durchführen einer Handlung an dem Nutzfahrzeug, während das Nutzfahrzeug sich an dem vorbestimmten Zielpunkt befindet, um einen Zustand des Nutzfahrzeuges durch die Handlung zu ändern.

Aufgabe der Erfindung ist, ein Verfahren zum Steuern eines Fahrzeuges auf einem geschlossenen Gelände anzugeben, mit dem jeglichen Fahrzeugen ohne großen Aufwand ein Zugang zu einem automatisiert betriebenen Gelände ermöglicht werden kann. Aufgabe der Erfindung ist weiterhin, eine Steuereinheit sowie ein Fahrzeug anzugeben.

Diese Aufgabe wird durch ein Verfahren, eine Steuereinheit sowie ein Fahrzeug gemäß den unabhängigen Ansprüchen gelöst. Die Unteransprüche geben bevorzugte Weiterbildungen an.

Erfindungsgemäß ist demnach ein Verfahren zum Steuern eines Fahrzeuges auf einem geschlossenen Gelände, insbesondere auf einem Betriebshof, vorgesehen, wobei das Fahrzeug eine Steuereinheit aufweist, die ausgebildet ist, ein Bremssystem und ein Antriebssystem in dem Fahrzeug automatisiert anzusteuern, um das Fahrzeug automatisiert, d.h. fahrerlos bzw. autonom, entlang eines festgelegten Pfades zu bewegen.

Nach einem Feststellen, dass in dem Fahrzeug kein Lenksystem zur Verfügung steht, das über automatisiert erzeugte Lenk-Steuersignale angesteuert werden kann, um einen Lenkwinkel von Rädern einer gelenkten Fahrzeugachse des Fahrzeuges automatisiert zu beeinflussen, mindestens die folgenden Schritte ausgeführt werden. Das "zur Verfügung stehen" beinhaltet dabei sowohl das Vorhandensein als auch die Funktionsfähigkeit eines solchen automatisiert ansteuerbaren Lenksystems, was somit zunächst festgestellt wird. Die Feststellung erfolgt dabei vorzugsweise im Startbereich des geschlossenen Bereiches, beispielsweise nach Ankunft auf dem geschlossenen Gelände.

Die durchgeführten Schritte sind insbesondere:
- Festlegung eines Pfades zwischen einem Starbereich und einem festgelegten Zielbereich auf dem geschlossenen Gelände, wobei bei der Festlegung des Pfades beispielsweise berücksichtigt wird, dass der Lenkwinkel an den Rädern der gelenkten Fahrzeugachse lediglich durch eine automatisierte Ansteuerung von Bremsen des Bremssystems im Fahrzeug beeinflusst werden kann;
- Erzeugen von Antriebs-Steuersignalen und Lenkbrems-Steuersignalen derartig, dass sich das Fahrzeug bei einer anschließenden automatisierten Ansteuerung des Antriebssystems und des Bremssystems mit diesen Steuersignalen von dem Startbereich entlang des Pfades in den festgelegten Zielbereich bewegt und sich der Lenkwinkel lediglich aufgrund einer automatisierten Ansteuerung der Bremsen des Bremssystems verändert.

Erfindungsgemäß ist weiterhin eine Steuereinheit zur Durchführung des Verfahrens sowie ein Fahrzeug mit der Steuereinheit vorgesehen.

Vorteilhafterweise wird also eine Lenkbremsfunktion ausgebildet, mit der das Fahrzeug, das in dem Fall keine Möglichkeit einer automatisierten Einstellung eines Lenkwinkels über ein herkömmliches Lenksystem hat, auf dem abgeschlossenen Gelände dennoch automatisiert gelenkt werden kann. Diese Lenkung wird dabei über das Lenkbrems-Steuersignal dadurch ermöglicht, dass die Bremsen bei einer automatisierten Ansteuerung des Bremssystems mit diesem Lenkbrems-Steuersignal radindividuell angesteuert werden, so dass sich ein Differenz-Bremsdruck zwischen Rädern derselben Fahrzeugachse ausbildet, aufgrund dessen bei einem positiven Lenkrollradius (Lenkrollhalbmesser) der betreffenden gelenkten Räder ein Lenkmoment resultiert, woraufhin sich ein mit dem Differenz-Bremsdruck zusammenhängender Lenkwinkel an den Rädern der gelenkten Fahrzeugachse einstellt. Auf diese Weise kann ein Fahrzeug mit defekter oder nicht vorhandenem automatisierten Lenksystem dennoch in ein automatisiert betriebenes geschlossenes Gelände, insbesondere einen Betriebshof oder einen Speditionshof, eingebunden werden, ohne dass es einer manuellen Steuerung bedarf, die auf solchen automatisiert betriebenen Höfen aus Gründen der gegenseitigen und sichere Koordination ungewollt ist.

Vorzugsweise kann dabei weiterhin vorgesehen sein, dass der Pfad derartig festgelegt wird, dass der Lenkwinkel an den Rädern der gelenkten Fahrzeugachse bei einer automatisierten Ansteuerung des Bremssystems mit den Lenkbrems-Steuersignalen zum Bewegen des Fahrzeuges entlang des Pfades unterhalb eines festgelegten Grenz-Lenkwinkels, beispielsweise unterhalb von 20°, bleibt. Dadurch wird ein Verschleiß der Bremsen des Fahrzeuges vermieden, da für größere Lenkwinkel eine entsprechend größerer Differenz-Bremsdruck zum Erzeugen eines größeren Lenkmoments nötig wäre, was auch absolut größere Bremsdrücke bedeuten würde. Dies kann bei der Planung bzw. Festlegung des Pfades bereits berücksichtigt werden, indem beispielsweise weniger Kurvenabschnitte und/oder entsprechend geringere Krümmungen, die maximal mit dem Grenz-Lenkwinkel durchfahren werden, in den vorhandenen Kurvenabschnitten zwischen dem Starbereich und dem Zielbereich festgelegt werden.

Vorzugsweise ist weiterhin vorgesehen, dass der Pfad von einem Managementsystem des geschlossenen Geländes oder auf einer Steuereinheit im Fahrzeug festgelegt wird. Es kann also über das Managementsystem auf die Infrastruktur des Geländes zurückgegriffen werden, um eine zuverlässigere Bahnplanung zu erreichen, oder aber autark vom Fahrzeug aus eine Bahnplanung erfolgen, wenn beispielsweise ein Managementsystem gerade nicht zur Verfügung steht bzw. nicht vorhanden ist.

Vorzugsweise kann dabei weiterhin vorgesehen sein, dass dem Managementsystem des geschlossenen Geländes zur Festlegung des Pfades Fahrzeug-Informationen betreffend das Fahrzeug übermittelt werden, so dass das Managementsystem vorab feststellen kann, ob in dem Fahrzeug ein automatisiert ansteuerbares Lenksystem zur Verfügung steht oder nicht. Dazu kann beispielsweise ein Drahtlos-Netzwerk des geschlossenen Geländes verwendet werden. Steht ein automatisiert ansteuerbares Lenksystem zur Verfügung, kann die Planung des Pfades dann wie herkömmlich ohne die zusätzlichen Einschränkungen, die sich aus der Lenkbremsung ergibt, erfolgen. Steht kein automatisiert steuerbares Lenksystem zur Verfügung, was aus den Fahrzeug-Informationen vom Managementsystem ableitbar ist, erfolgt die Bahnplanung dann wie oben beschrieben. Das Managementsystem kann also je nach festgestellter Fahrzeug-Ausstattung automatisch die entsprechende Bahnplanungsroutine einleiten.

Vorzugsweise ist weiterhin vorgesehen, dass der Pfad und/oder der Zielbereich in Abhängigkeit von Hindernissen und/oder anderen Fahrzeugen auf dem geschlossenen Gelände festgelegt wird oder werden. Dabei kann berücksichtigt werden, dass aufgrund der Einschränkungen beispielsweise des einstellbaren Lenkwinkels durch die Lenkbremsfunktion gewisse Rangiermanöver aufwändiger bzw. unmöglich sind, wobei auch zu bedenken ist, dass das Fahrzeug für eine Lenkbewegung in Bewegung sein muss. Entsprechend können der Pfad und auch der Zielbereich festgelegt bzw. ausgewählt werden.

Vorzugsweise ist weiterhin vorgesehen, dass vor dem automatisierten Ansteuern des Antriebssystems und des Bremssystems mit den Steuersignalen geprüft wird, ob eine Fahrzeugmasse des Fahrzeuges eine festgelegte Grenzmasse, beispielsweise 31t, unterschreitet oder überschreitet. Dadurch kann ein übermäßiger Verschleiß verhindert werden, der bei besonders schweren Fahrzeugen auftreten kann. Vorzugsweise ist dazu vorgesehen, dass eine Freigabe zur automatisierten Erzeugung des Lenkbrems-Steuersignals und/oder zur automatisierten Ansteuerung des Bremssystems des Fahrzeuges mit dem Lenkbrems-Steuersignal, d.h. eine Lenkbremsung, nur dann erfolgt, wenn die Fahrzeugmasse die Grenzmasse unterschreitet. Eine Lenkbremsung wird also unterdrückt und das Fahrzeug hat sich ggf. manuell gesteuert zum Zielbereich zu begeben, bis beispielsweise nach dem Entladen die Fahrzeugmasse wieder unterhalb der Grenzmasse liegt.

Vorzugsweise ist weiterhin vorgesehen, dass zumindest während der automatisierten Ansteuerung des Bremssystems mit dem Lenkbrems-Steuersignal eine Bremsen-Temperatur zumindest der Bremsen, die automatisiert angesteuert werden, überwacht wird, wobei eine automatisierte Erzeugung des Lenkbrems-Steuersignals und/oder eine automatisierte Ansteuerung des Bremssystems des Fahrzeuges mit dem Lenkbrems-Steuersignal, d.h. eine Lenkbremsung, nur dann aufrecht erhalten wird, wenn die Bremsen-Temperatur unterhalb eines Temperatur-Grenzwertes liegt. Dadurch kann eine zusätzliche Verschleißüberwachung erfolgen, die sich aus einer erhöhten Bremsen-Temperatur ableiten lässt.

Vorzugsweise ist weiterhin vorgesehen, dass ein Lenkbrems-Zeitraum ermittelt wird, der angibt, wie lang eine automatisierte Ansteuerung des Bremssystems mit dem Lenkbrems-Steuersignal zum automatisierten Abfahren des Pfades über die Lenkbremsung erfolgt ist, wobei eine automatisierte Erzeugung des Lenkbrems-Steuersignals und/oder eine automatisierte Ansteuerung des Bremssystems des Fahrzeuges mit dem Lenkbrems-Steuersignal, d.h. eine Lenkbremsung, nur so lange aufrechterhalten wird, bis der Lenkbrems-Zeitraum einen festgelegten Grenz-Zeitraum überschreitet. Auch dadurch kann ein Verschleiß abgeschätzt werden, da eine erhöhte Dauer für eine Lenkbremsung ein Anzeichen für einen übermäßigen Verschleiß ist. Dies kann auch mit der oben beschriebenen Temperaturüberwachung kombiniert werden. Grundsätzlich kann der Verschleiß aber auch nur anhand des Lenkbrems-Zeitraums abgeschätzt werden.

Vorzugsweise ist weiterhin vorgesehen, dass sich in dem Zielbereich eine Laderampe oder ein Abladeplatz oder eine Parklücke befindet. Auf diese Weise ist ein flexibler Einsatz des Verfahrens gegeben, das nicht nur auf einem Betriebshof oder einem Speditionshof, sondern auch auf einem Rastplatz oder einem Hafengelände zur Anwendung kommen kann.

Die Erfindung wird im Folgenden anhand von Figuren näher erläutert. Es zeigen:
- Fig. 1: eine schematische Ansicht eines Betriebshofes als geschlossenes Gelände;
- Fig. 1a: eine schematische Ansicht eines Fahrzeuges; und
- Fig. 2: ein Flussdiagramm des erfindungsgemäßen Verfahrens.

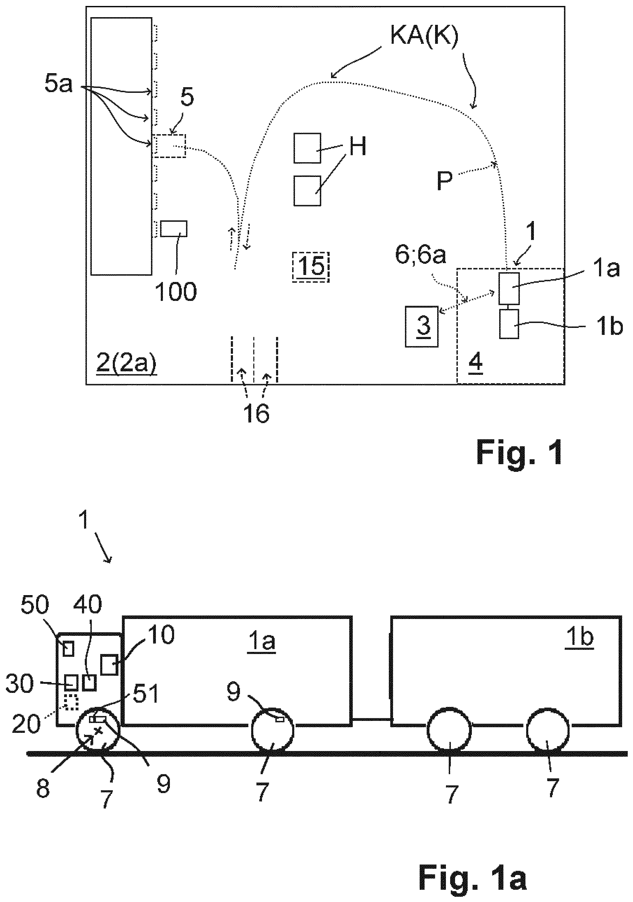

Figur 1a zeigt schematisiert ein Fahrzeug 1, das aus einem Zugfahrzeug 1a und einem daran angekuppelten Anhänger 1b besteht und das sich gemäß Fig. 1 auf einem abgeschlossenen Gelände 2, beispielsweise einem Betriebshof 2a (Speditionshof) oder einem Rastplatz oder einem Hafengelände, befindet. Das abgeschlossene Gelände 2a wird von einem Managementsystem 3 kontrolliert bzw. koordiniert, das insbesondere dafür sorgt, dass ankommende Fahrzeuge 1 ausgehend von einem Startbereich 4 entlang eines festgelegten Pfades P zu einem definierten Zielbereich 5 geleitet werden, beispielsweise zu einer festgelegten Laderampe 5a.

Der Pfad P wird dazu vom Managementsystem 3 in Abhängigkeit von gewissen Fahrzeug-Informationen I1, die beispielsweise eine Ladung, eine Berechtigung, ein Ziel, eine Fahrzeug-Ausstattung, etc. enthalten können, geplant bzw. festgelegt und über ein beliebiges Kommunikationssystem 6, beispielsweise ein stationäres und lokales Drahtlos-Netzwerk 6a (z.B. WLAN), auf eine Fahrzeug-Steuereinheit 10 im betreffenden Fahrzeug 1 übertragen. Die Fahrzeug-Steuereinheit 10 sorgt dann durch Ansteuerung der entsprechenden Systemkomponenten des Fahrzeuges 1 über Steuersignale dafür, dass sich das Fahrzeug 1 automatisiert entlang des festgelegten Pfades P zum Zielbereich 5 bewegt.

Der Pfad P wird dabei insbesondere in Abhängigkeit der Fahrzeug-Ausstattung festgelegt, aus der abzuleiten ist, welche Systemkomponenten die Fahrzeug-Steuereinheit 10 ansteuern kann, um dem festgelegten Pfad P zu folgen. Dadurch kann berücksichtigt werden, auf welche Art und Weise eine autonome Steuerung des Fahrzeuges 1 auf dem abgeschlossenen Gelände 2 möglich ist. Steht im Fahrzeug 1 beispielsweise kein automatisiert ansteuerbares Lenksystem 20 zur Verfügung, über das ein Lenkwinkel d der Räder 7 einer lenkbaren Fahrzeugachse 8, insbesondere der Vorderachse des Fahrzeuges 1, aktiv eingestellt werden kann, ist dies bei der Planung des Pfades P durch das Managementsystem 3 entsprechend zu berücksichtigen, so dass auch ein solches Fahrzeug 1 in den automatisierten Ablauf auf dem Betriebshof 2a eingebunden werden kann.

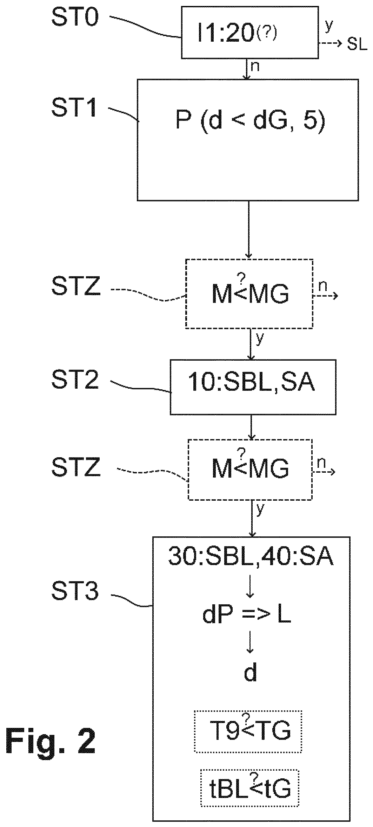

Im Rahmen eines Verfahrens zum Steuern des Fahrzeuges 1 auf dem abgeschlossenen Gelände 2, insbesondere dem Betriebshof 2a, ist gemäß dem Flussdiagramm in Fig. 2 unter dieser Voraussetzung beispielsweise das folgende Vorgehen vorgesehen:
Zunächst wird vom Managementsystem 3 in einem anfänglichen Schritt ST0 anhand der Fahrzeug-Informationen I1 ermittelt, ob ein automatisiert ansteuerbares Lenksystem 20 zur Verfügung steht, d.h. im Fahrzeug 1 vorhanden ist und entsprechend auch funktionsfähig ist. Ist dies der Fall, kann der Pfad P vom Managementsystem 3 wie üblich derartig geplant werden, dass das Fahrzeug 1 durch eine automatisierte Ansteuerung des automatisiert steuerbaren Lenksystems 20 über Lenk-Steuersignale SL, des automatisiert steuerbaren Antriebssystems 30 über Antriebs-Steuersignale SA und des automatisiert steuerbaren Bremssystems 40 über Brems-Steuersignale SB entlang des Pfades P bewegt wird. Die jeweiligen Steuersignale SA, SB, SL werden dabei durch die Steuereinheit 10 in Abhängigkeit des Pfades P auch automatisiert erzeugt. Bei der Festlegung des Pfades P wird die Infrastruktur auf dem Betriebshof 2a verwendet, d.h. es werden Hindernisse H und andere stehende oder sich bewegende Fahrzeuge 100 erkannt und berücksichtigt.

Für den Fall, dass ein automatisiert steuerbares Lenksystem 20 im Fahrzeug 1 nicht zur Verfügung steht, weil ein solches nicht vorhanden ist oder dieses einen Defekt aufweist, wird bei der Festlegung des Pfades P vom Startbereich 4 zum Zielbereich 5 vom Managementsystem 3 in einem ersten Schritt ST1 berücksichtigt, dass eine Lenkung des Fahrzeuges 1 durch Einstellung eines bestimmten Lenkwinkels d an den Rädern 7 der gelenkten Fahrzeugachse 8 nur im Rahmen einer Lenkbremsfunktion erfolgen kann.

Grundsätzlich können der anfängliche Prüfungs-Schritt ST0 und der erste Schritt ST1 zum Festlegen des Pfades P auch von der Steuereinheit 10 selbst durchgeführt werden, wobei statt auf den Rückgriff auf die Infrastruktur des Betriebshofes 2a ein Sensorsystem 50 mit der Sensorik im Fahrzeug 1 verwendet wird, um den Pfad P zu planen und festzulegen. Die Fahrzeug-Informationen I1, insbesondere die Fahrzeug-Ausstattung, ist der Steuereinheit 10 selbst bekannt, so dass die Planung und Festlegung des Pfades P auch unter diesem Gesichtspunkt stattfinden kann.

Die Steuereinheit 10 wird dann in einem nachfolgenden zweiten Schritt ST2 statt den Lenk-Steuersignalen SL zum automatisierten Lenken des Fahrzeuges 1 Lenkbrems-Steuersignale SBL erzeugen, um den Lenkwinkel d der Räder 7 der gelenkten Fahrzeugachse 8 zu beeinflussen, wobei gleichzeitig auch ein Antriebs-Steuersignal SA erzeugt wird, da eine Lenkbremsung nur während der Fahrt (vorwärts oder rückwärts) des Fahrzeuges 1 möglich ist. Diese erzeugten Lenkbrems-Steuersignale SBL und Antriebs-Steuersignale SA werden dann in einem dritten Schritt ST3 automatisiert an das Bremssystem 40 bzw. das Antriebssystem 30 übertragen, woraufhin bei fahrendem Fahrzeug 1 durch eine radindividuelle Ansteuerung der Bremsen 9, insbesondere an den Rädern 7 der gelenkten Fahrzeugachse 8, ein bestimmtes Lenkmoment L am Fahrzeug 1 resultiert, das aufgrund des positiven Lenkrollradius an den Rädern 7 der gelenkten Fahrzeugachse 8 für ein Einschlagen dieser Räder 7 um einen bestimmten Lenkwinkel d und damit für ein Lenken des angetriebenen Fahrzeuges 1 sorgt.

Die Lenkbrems-Steuersignale SBL werden dabei derartig erzeugt, dass an den Rädern 7 der gelenkten Fahrzeugachse 8 durch radindividuelle Ansteuerung der Bremsen 9 ein Differenz-Bremsdruck dP aufgebaut wird, wobei der Bremsdruck an einem der Bremsen 9 der gelenkten Fahrzeugachse 8 idealerweise null ist, um die Bremsen 9 nicht unnötig zu beanspruchen. Dieser Differenz-Bremsdruck dP korrespondiert über das aufgebaute Lenkmoment L (und über den positiven Lenkrollradius) mit einem sich einstellenden Lenkwinkel d an den Rädern 7 der gelenkten Fahrzeugachse 8, der wiederum die Lenkvorgabe an der jeweiligen Position des Pfades P automatisiert umsetzt. Auf diese Weise kann der festgelegte Pfad P durch eine automatisierte Ansteuerung des Bremssystems 40 mit dem Lenkbrems-Steuersignal SBL sowie des Antriebssystems 30 mit den Antriebs-Signalen SA abgefahren werden. Eine Abbremsung oder ein Antreiben des Fahrzeuges 1 wird dabei durch eine Überlagerung des Antriebs-Steuersignals SA oder des Brems-Steuersignals SB mit dem Lenkbrems-Steuersignal SBL erreicht.

Da sich das Fahrzeug 1 durch eine Lenkbremsung weniger stark bzw. nur mit einem Grenz-Lenkwinkel dG von beispielsweise 20° effizient lenken lässt, ist dies bei der Festlegung des Pfades P durch das Managementsystem 3 im ersten Schritt ST1 zu berücksichtigen. Zwar können auch größere Lenkwinkel d als ein Grenz-Lenkwinkel dG von 20° durch die beschriebene Lenkbremsung dargestellt werden, allerdings nur mit einem erhöhten Verschleiß der jeweils angesteuerten Bremsen 9. Daher ist ebenfalls zu berücksichtigen, dass aufgrund der Lenkbremsung ein erhöhter Verschleiß der jeweiligen Bremsen 9, die zum Lenkbremsen angesteuert werden, auftritt. Demnach ist der Pfad P beispielsweise derartig festzulegen, dass dieser nur wenige Kurvenabschnitte KA aufweist und/oder nur Kurvenabschnitte KA mit einer geringen Krümmung K auftreten, so dass der eingestellte Differenz-Bremsdruck dP und demnach auch die absoluten Bremsdrücke an den jeweiligen Bremsen 9 geringer ausfallen.

Unter Umständen ist auch die Festlegung des Zielbereiches 5 zu berücksichtigen, an dem beispielsweise ein Aufnehmen oder Abgeben einer Ladung erfolgen soll. Dabei kann beispielsweise berücksichtigt werden, dass ein Fahrzeug 1 ohne ein automatisiert ansteuerbares Lenksystem 30 an eine freie Laderampe 5a zwischen zwei bereits von anderen Fahrzeugen 100 besetzten Laderampen 5a nur sehr aufwändig und mit einer Vielzahl an Kurvenabschnitten KA unter Rückgriff auf eine Lenkbremsung im oben beschriebenen Sinne rangieren kann. Daher ist in dieser Situation der Pfad P mit einer entsprechend anderen Laderampe 5a als Zielbereich 5 zu wählen, bei der weniger Kurvenabschnitte KA und/oder Kurvenabschnitte KA mit geringerer Krümmung K nötig sind.

Vor oder nach der Festlegung des Pfades P für die automatisierte Steuerung des Fahrzeuges 1 unter Verwendung der Lenkbremsfunktion (erster Schritt ST1) kann ergänzend eine Fahrzeugmasse M des Fahrzeuges 1 erfasst werden, z.B. aus Druckinformationen einer Luftfederung und/oder einer anderweitigen Massenschätzung, um die nachfolgende automatisierte Steuerung des Fahrzeuges 1 in Abhängigkeit davon freizuschalten. In einem Zwischenschritt STZ wird dazu geprüft, ob die erfasste Fahrzeugmasse M eine Grenzmasse MG von beispielsweise 31t übersteigt. Lediglich bei einem Unterschreiten der Grenzmasse MG findet nachfolgend eine Freigabe zur automatisierten Erzeugung des Lenkbrems-Steuersignals SBL und/oder zur automatisierten Ansteuerung des Bremssystems 30 mit dem Lenkbrems-Steuersignal SBL in den Schritten ST2 bzw. ST3 statt. Gleichwirkend damit kann eine Freigabe der Lenkbremsfunktion dauerhaft aktiviert sein, wobei die Lenkbremsfunktion bei einem Überschreiten der Grenzmasse MG von der Steuereinheit 10 unterdrückt wird.

Dadurch wird berücksichtigt, dass eine Umsetzung der Lenkbremsfunktion bei sehr schweren Fahrzeugen 1 zu einem sehr hohen Verschleiß der Bremsen 9 führen kann. Bei einem Fahrzeug 1 mit einer Fahrzeugmasse M, die größer als die Grenzmasse MG ist, muss das Fahrzeug 1 also auf dem Betriebshof 2a selbstständig bzw. manuell zum Zielbereich 5 gefahren werden. Hierbei handelt es sich dann beispielsweise um eine Strecke, auf der das Fahrzeug 1 voll beladen ist (Hinweg zum Entladen am Zielbereich 5 oder Rückweg nach dem Beladen im Zielbereich 5), während die Strecke vor dem Beladen bzw. nach dem Entladen automatisiert zurückgelegt werden könnte, insofern die Fahrzeugmasse M die Grenzmasse MG unterschreitet.

Beim Abfahren des Pfades P unter Verwendung der Lenkbremsfunktion kann ergänzend eine Temperaturüberwachung vorgesehen sein. Dazu ist an den Bremsen 9 eine Temperatursensorik 51 angeordnet. Überschreitet eine Bremsen-Temperatur T9 einzelner Bremsen 9 einen Temperatur-Grenzwert TG, so wird eine Freigabe zur automatisierten Erzeugung des Lenkbrems-Steuersignals SBL und/oder zur automatisierten Ansteuerung des Bremssystems 30 mit dem Lenkbrems-Steuersignal SBL in den Schritten ST2 bzw. ST3 zurückgenommen bzw. die Lenkbremsfunktion unterdrückt.

Ergänzend oder alternativ dazu kann auch ein Lenkbrems-Zeitraum tBL gemessen werden, innerhalb dessen die Bremsen 9 zur Umsetzung der Lenkbremsfunktion angesteuert werden, beispielsweise durch eine automatisierte Funktion im Bremssystem 30 und/oder durch die Steuereinheit 10. Wird ein Grenz-Zeitraum tG überschritten, ist auch unabhängig von der Höhe der Bremsen-Temperatur T9 vorgesehen, dass eine Freigabe zur automatisierten Erzeugung des Lenkbrems-Steuersignals SBL und/oder zur automatisierten Ansteuerung des automatisierten Bremssystems 30 mit dem Lenkbrems-Steuersignal SBL in den Schritten ST2 bzw. ST3 zurückgenommen bzw. die Lenkbremsfunktion unterdrückt wird. Dadurch wird unabhängig von der Bremsen-Temperatur T9 ein zu hoher Verschleiß vermieden.

Statt den Pfad P zum Rangieren an eine Laderampe 5a festzulegen kann auch ein Abladen von Schüttgut an einem Abladeplatz 15 vorgesehen sein, wobei dann ebenfalls eine entsprechende Wahl des Pfades P unter den oben beschriebenen Bedingungen im Hinblick auf eine Lenkbremsung zu erfolgen hat.

Durch entsprechende Ansteuerung der jeweiligen Systemkomponenten 20, 30, 40 durch die Steuereinheit 10 kann der Pfad P automatisiert abgefahren werden, wobei die Steuereinheit 10 unter Rückgriff auf ein Sensorsystem 50 mit der entsprechenden Sensorik im Fahrzeug 1 diese automatisierte Fahrt auch entsprechend überwachen kann, beispielsweise einen Ist-Soll-Vergleich der Position des Fahrzeuge 1 und/oder eine Hindernis-Erkennung durchführen kann.

Ist das Fahrzeug 1 nachfolgend in einem vierten Schritt ST4 in dem Zielbereich 5 in der entsprechend vorgesehen Pose (Orientierung, Position) angekommen, kann die jeweilige Aufgabe durchgeführt werden, z.B. ein Beladen, Entladen, Servicetätigkeiten, etc., bevor sich das Fahrzeug 1 nachfolgend wieder auf einem vorgegebenen Pfad P zu einem weiteren Ziel- oder zurück zum ursprünglichen Startbereich 4 zum Verlassen des Betriebshofes 2a bewegt.

Statt auf einem Betriebshof 2a wie beschrieben, kann das Verfahren auch auf einem Rastplatz als geschlossenes Gelände 2 durchgeführt werden, wobei der Fahrer das Fahrzeug 1 am Rastplatzeingang (Startbereich 4) abgibt und das Fahrzeug 1 anschließend autonom unter Lenkbremsung in eine freie Parklücke 16 (Zielbereich 5) rangiert wird, die mit der Lenkbremsfunktion erreichbar ist.

### Bezugszeichenliste (Teil der Beschreibung)

- 1: Fahrzeug
- 1a: Zugfahrzeug
- 1b: Anhänger
- 2: abgeschlossenes Gelände
- 2a: Betriebshof
- 3: Managementsystem
- 4: Startbereich
- 5: Zielbereich
- 5a: Laderampe
- 6: Kommunikationssystem
- 6a: Drahtlos-Netzwerk
- 7: Rad
- 8: lenkbare Fahrzeugachse
- 9: Bremse
- 10: Fahrzeug-Steuereinheit
- 15: Abladeplatz
- 16: Parklücke
- 20: automatisiert ansteuerbares Lenksystem
- 30: automatisiert ansteuerbares Antriebssystem
- 40: automatisiert ansteuerbares Bremssystem
- 50: Sensorsystem
- 51: Temperatursensorik
- 100: andere Fahrzeuge
- d: Lenkwinkel
- dG: Grenz-Lenkwinkel
- dP: Differenz-Bremsdruck
- H: Hindernis
- M: Fahrzeugmasse
- MG: Grenzmasse
- I1: Fahrzeug-Information
- P: Pfad
- K: Krümmung
- KA: Kurvenabschnitt
- L: Lenkmoment
- SA: Antriebs-Steuersignal
- SB: Brems-Steuersignal
- SBL: Lenkbrems-Steuersignal
- tBL: Lenkbrems-Zeitraum
- tG: Grenz-Zeitraum
- T9: Bremsen-Temperatur
- TG: Grenz-Temperatur
- ST0, ST1, ST2, ST3, ST5, STZ: Schritte des Verfahrens

## Patentansprüche

1. Verfahren zum Steuern eines Fahrzeuges (1) auf einem geschlossenen Gelände (2), insbesondere auf einem Betriebshof (2a), wobei das Fahrzeug (1) eine Steuereinheit (10) aufweist, die ausgebildet ist, ein Bremssystem (30) und ein Antriebssystem (40) in dem Fahrzeug (1) automatisiert anzusteuern, um das Fahrzeug (1) automatisiert entlang eines festgelegten Pfades (P) zu bewegen,
wobei nach einem Feststellen, dass in dem Fahrzeug (1) kein Lenksystem (20) zur Verfügung steht, das über automatisiert erzeugte Lenk-Steuersignale (SL) angesteuert werden kann, um einen Lenkwinkel (d) von Rädern (7) einer gelenkten Fahrzeugachse (8) des Fahrzeuges (1) automatisiert zu beeinflussen (ST0), mindestens die folgenden Schritte ausgeführt werden:
- Festlegung eines Pfades (P) zwischen einem Starbereich (4) und einem festgelegten Zielbereich (5) auf dem geschlossenen Gelände (2) (ST1);
- Erzeugen von Antriebs-Steuersignalen (SA) und Lenkbrems-Steuersignalen (SBL) derartig, dass sich das Fahrzeug (1) bei einer anschließenden automatisierten Ansteuerung des Antriebssystems (40) und des Bremssystems (30) mit diesen Steuersignalen (SA, SBL) von dem Startbereich (4) entlang des Pfades (P) in den festgelegten Zielbereich (5) bewegt und sich der Lenkwinkel (d) lediglich aufgrund einer automatisierten Ansteuerung der Bremsen (9) des Bremssystems (30) verändert (ST3).

2. Verfahren nach Anspruch 1, **dadurch gekennzeichnet, dass** der Pfad (P) derartig festgelegt wird, dass der Lenkwinkel (d) an den Rädern (7) der gelenkten Fahrzeugachse (8) bei einer automatisierten Ansteuerung des Bremssystems (30) mit den Lenkbrems-Steuersignalen (SBL) zum Bewegen des Fahrzeuges (1) entlang des Pfades (P) unterhalb eines festgelegten Grenz-Lenkwinkels (dG) bleibt.

3. Verfahren nach Anspruch 2, **dadurch gekennzeichnet, dass** der Grenz-Lenkwinkel (dG) 20° beträgt.

4. Verfahren nach einem der vorhergehenden Ansprüche, **dadurch gekennzeichnet, dass** der Pfad (P) von einem Managementsystem (3) des geschlossenen Geländes (2) oder auf einer Steuereinheit (10) im Fahrzeug (1) festgelegt wird.

5. Verfahren nach Anspruch 4, **dadurch gekennzeichnet, dass** dem Managementsystem (3) des geschlossenen Geländes (2) zur Festlegung des Pfades (P) Fahrzeug-Informationen (I1) betreffend das Fahrzeug (1) übermittelt werden, so dass das Managementsystem (3) vorab feststellen kann, ob in dem Fahrzeug (1) ein automatisiert ansteuerbares Lenksystem (20) zur Verfügung steht.

6. Verfahren nach einem der vorhergehenden Ansprüche, **dadurch gekennzeichnet, dass** bei der Festlegung des Pfades (P) berücksichtigt wird, dass der Lenkwinkel (d) an den Rädern (7) der gelenkten Fahrzeugachse (8) lediglich durch eine automatisierte Ansteuerung von Bremsen (9) des Bremssystems (30) im Fahrzeug (1) beeinflusst werden kann.

7. Verfahren nach einem der vorhergehenden Ansprüche, **dadurch gekennzeichnet, dass** der Pfad (P) und/oder der Zielbereich (5) in Abhängigkeit von Hindernissen (H) und/oder anderen Fahrzeugen (100) auf dem geschlossenen Gelände (2) festgelegt wird oder werden.

8. Verfahren nach einem der vorhergehenden Ansprüche, **dadurch gekennzeichnet, dass** vor dem automatisierten Ansteuern des Antriebssystems (40) und des Bremssystems (30) mit den Steuersignalen (SA, SBL) (ST3) geprüft wird, ob eine Fahrzeugmasse (M) des Fahrzeuges (1) eine festgelegte Grenzmasse (MG), beispielsweise 31t, unterschreitet oder überschreitet.

9. Verfahren nach Anspruch 8, **dadurch gekennzeichnet, dass** eine Freigabe zur automatisierten Erzeugung des Lenkbrems-Steuersignals (SBL) und/oder zur automatisierten Ansteuerung des Bremssystems (30) des Fahrzeuges (1) mit dem Lenkbrems-Steuersignal (SBL) nur dann erfolgt (STZ), wenn die Fahrzeugmasse (M) die Grenzmasse (MG) unterschreitet.

10. Verfahren nach einem der vorhergehenden Ansprüche, **dadurch gekennzeichnet, dass** zumindest während der automatisierten Ansteuerung des Bremssystems (30) mit dem Lenkbrems-Steuersignal (SBL) eine Bremsen-Temperatur (T9) zumindest der Bremsen (9), die automatisiert angesteuert werden, überwacht wird, wobei eine automatisierte Erzeugung des Lenkbrems-Steuersignals (SBL) und/oder eine automatisierte Ansteuerung des Bremssystems (30) des Fahrzeuges (1) mit dem Lenkbrems-Steuersignal (SBL) nur dann aufrecht erhalten wird, wenn die Bremsen-Temperatur (T9) unterhalb eines Temperatur-Grenzwertes (TG) liegt.

11. Verfahren nach einem der vorhergehenden Ansprüche, **dadurch gekennzeichnet, dass** ein Lenkbrems-Zeitraum (tBL) ermittelt wird, der angibt, wie lang eine automatisierte Ansteuerung des Bremssystems (30) mit dem Lenkbrems-Steuersignal (SBL) zum automatisierten Abfahren des Pfades (P) erfolgt ist, wobei eine automatisierte Erzeugung des Lenkbrems-Steuersignals (SBL) und/oder eine automatisierte Ansteuerung des Bremssystems (30) des Fahrzeuges (1) mit dem Lenkbrems-Steuersignal (SBL) nur so lange aufrechterhalten wird, bis der Lenkbrems-Zeitraum (tBL) einen festgelegten Grenz-Zeitraum (tG) überschreitet.

12. Verfahren nach einem der vorherigen Ansprüche, **dadurch gekennzeichnet, dass** das Lenkbrems-Steuersignal (SBL) derartig erzeugt wird, dass die Bremsen (9) bei einer automatisierten Ansteuerung des Bremssystems (30) mit diesem Lenkbrems-Steuersignal (SBL) radindividuell angesteuert werden, so dass sich ein Differenz-Bremsdruck (dP) zwischen Rädern (7) derselben Fahrzeugachse (8) ausbildet, aufgrund dessen ein Lenkmoment (L) resultiert und sich ein mit dem Differenz-Bremsdruck (dP) zusammenhängender Lenkwinkel (d) an den Rädern (7) der gelenkten Fahrzeugachse (8) einstellt.

13. Verfahren nach einem der vorhergehenden Ansprüche, **dadurch gekennzeichnet, dass** sich in dem Zielbereich (5) eine Laderampe (5a) oder ein Abladeplatz (15) oder eine Parklücke (16) befindet.

14. Verfahren nach einem der vorhergehenden Ansprüche, **dadurch gekennzeichnet, dass** das Feststellen, ob in dem Fahrzeug (1) ein automatisiert ansteuerbares Lenksystem (20) zur Verfügung steht, im Startbereich (4) des geschlossenen Geländes (2) erfolgt.

15. Steuereinheit (10) für ein Fahrzeug (1), insbesondere zur Durchführung eines Verfahrens nach einem der vorhergehenden Ansprüche, wobei die Steuereinheit (10) ausgebildet ist, ein Bremssystem (30) und ein Antriebssystem (40) in dem Fahrzeug (1) automatisiert anzusteuern, um das Fahrzeug (1) automatisiert entlang eines festgelegten Pfades (P) zu bewegen, wobei die Steuereinheit (10) dazu ausgebildet ist, Antriebs-Steuersignale (SA) und Lenkbrems-Steuersignale (SBL) derartig zu erzeugen, dass sich das Fahrzeug (1) bei einer automatisierten Ansteuerung des Antriebssystems (40) und des Bremssystems (30) mit diesen Steuersignalen (SA, SBL) von dem Startbereich (4) entlang eines vorab festgelegten Pfades (P) in den festgelegten Zielbereich (5) bewegt und sich der Lenkwinkel (d) lediglich aufgrund einer automatisierten Ansteuerung der Bremsen (9) des Bremssystems (30) verändert,
wobei bei der Festlegung des Pfades (P) zwischen einem Starbereich (4) und einem festgelegten Zielbereich (5) auf dem geschlossenen Gelände (2) berücksichtigt wird, dass der Lenkwinkel (d) an den Rädern (7) der gelenkten Fahrzeugachse (8) lediglich durch eine automatisierte Ansteuerung von Bremsen (9) des Bremssystems (30) im Fahrzeug (1) beeinflusst werden kann.

16. Steuereinheit (10) nach Anspruch 15, **dadurch gekennzeichnet, dass** die Steuereinheit (10) ausgebildet ist, den Pfad (P) selbst zu ermitteln oder den Pfad (P) von einem Managementsystem (3) des geschlossenen Geländes (2) zu empfangen.

17. Fahrzeug (1) mit einem Bremssystem (30) und einem Antriebssystem (40) und einer Steuereinheit (10) nach Anspruch 15 oder 16.

## Claims

1. Method for controlling a vehicle (1) on a closed site (2), in particular at a depot (2a), wherein the vehicle (1) has a control unit (10) which is designed to automatically control a braking system (30) and a drive system (40) in the vehicle (1) in order to move the vehicle (1) automatically along a defined path (P),
wherein, after determining that no steering system (20) is available in the vehicle (1) that can be controlled via automatically generated steering control signals (SL) in order to automatically influence (ST0) a steering angle (d) of wheels (7) of a steered vehicle axle (8) of the vehicle (1), at least the following steps are carried out:
- defining a path (P) between a starting region (4) and a defined destination region (5) on the closed site (2) (ST1);
- generating drive control signals (SA) and steering brake control signals (SBL) such that the vehicle (1) moves from the starting region (4) along the path (P) into the defined destination region (5) with a subsequent automated control of the drive system (40) and the braking system (30) using these control signals (SA, SBL), and the steering angle (d) changes only due to automated control of the brakes (9) of the braking system (30) (ST3).

2. Method according to claim 1, **characterized in that** the path (P) is defined in such a way that the steering angle (d) at the wheels (7) of the steered vehicle axle (8) remains below a defined limit steering angle (dG) when the braking system (30) is automatically controlled with the steering brake control signals (SBL) to move the vehicle (1) along the path (P).

3. Method according to claim 2, **characterized in that** the limit steering angle (dG) is 20°.

4. Method according to any of the preceding claims, **characterized in that** the path (P) is defined by a management system (3) of the closed site (2) or on a control unit (10) in the vehicle (1).

5. Method according to claim 4, **characterized in that** vehicle information (11) relating to the vehicle (1) is transmitted to the management system (3) of the closed site (2) for defining the path (P), so that the management system (3) can determine in advance whether an automatically controllable steering system (20) is available in the vehicle (1).

6. Method according to any of the preceding claims, **characterized in that** when the path (P) is defined, it is taken into account that the steering angle (d) at the wheels (7) of the steered vehicle axle (8) can be influenced only by automated control of brakes (9) of the braking system (30) in the vehicle (1).

7. Method according to any of the preceding claims, **characterized in that** the path (P) and/or the destination region (5) is or are defined depending on obstacles (H) and/or other vehicles (100) on the closed site (2).

8. Method according to any of the preceding claims, **characterized in that** before the drive system (40) and the braking system (30) are automatically controlled with the control signals (SA, SBL) (ST3), it is checked whether a vehicle mass (M) of the vehicle (1) falls below or exceeds a defined limit mass (MG), for example 31t.

9. Method according to claim 8, **characterized in that** a release for the automated generation of the steering brake control signal (SBL) and/or for the automated control of the braking system (30) of the vehicle (1) with the steering brake control signal (SBL) only occurs (STZ) when the vehicle mass (M) falls below the limit mass (MG).

10. Method according to any of the preceding claims, **characterized in that** at least during the automated control of the braking system (30) with the steering brake control signal (SBL), a brake temperature (T9) of at least the brakes (9) which are automatically controlled is monitored, an automated generation of the steering brake control signal (SBL) and/or an automated control of the braking system (30) of the vehicle (1) with the steering brake control signal (SBL) being maintained only when the brake temperature (T9) is below a temperature limit value (TG).

11. Method according to any of the preceding claims, **characterized in that** a steering brake period (tBL) is determined which indicates how long an automated control of the braking system (30) with the steering brake control signal (SBL) for the automated travel of the path (P) has taken place, an automated generation of the steering brake control signal (SBL) and/or an automated control of the braking system (30) of the vehicle (1) with the steering brake control signal (SBL) being maintained only until the steering brake period (tBL) exceeds a defined limit period (tG).

12. Method according to any of the preceding claims, **characterized in that** the steering brake control signal (SBL) is generated in such a way that the brakes (9) are controlled individually for each wheel with this steering brake control signal (SBL) when the braking system (30) is controlled automatically, so that a differential brake pressure (dP) is formed between wheels (7) of the same vehicle axle (8), as a result of which a steering torque (L) results and a steering angle (d) related to the differential brake pressure (dP) is established at the wheels (7) of the steered vehicle axle (8).

13. Method according to any of the preceding claims, **characterized in that** there is a loading ramp (5a) or an unloading place (15) or a parking space (16) in the destination region (5).

14. Method according to any of the preceding claims, **characterized in that** determining whether an automatically controllable steering system (20) is available in the vehicle (1) takes place in the starting region (4) of the closed site (2).

15. Control unit (10) for a vehicle (1), in particular for carrying out a method according to any of the preceding claims, wherein the control unit (10) is designed to automatically control a braking system (30) and a drive system (40) in the vehicle (1) in order to automatically move the vehicle (1) along a defined path (P), wherein the control unit (10) is designed to generate drive control signals (SA) and steering brake control signals (SBL) such that the vehicle (1) moves from the starting region (4) along a predefined path (P) into the defined destination region (5) with an automated control of the drive system (40) and the braking system (30) using these control signals (SA, SBL), and the steering angle (d) changes only due to automated control of the brakes (9) of the braking system (30),
wherein, when the path (P) is defined between a starting region (4) and a defined destination region (5) on the closed site (2), it is taken into account that the steering angle (d) at the wheels (7) of the steered vehicle axle (8) can be influenced only by automated control of brakes (9) of the braking system (30) in the vehicle (1).

16. Control unit (10) according to claim 15, **characterized in that** the control unit (10) is designed to determine the path (P) itself or to receive the path (P) from a management system (3) of the closed site (2).

17. Vehicle (1) comprising a braking system (30) and a drive system (40) and a control unit (10) according to claim 15 or 16.

## Revendications

1. Procédé permettant la commande d'un véhicule (1) dans une enceinte fermée (2), en particulier dans un dépôt (2a), dans lequel le véhicule (1) présente une unité de commande (10) configurée pour commander de manière automatisée un système de freinage (30) et un système d'entraînement (40) dans le véhicule (1) afin de déplacer le véhicule (1) de manière automatisée le long d'une trajectoire (P) définie,
dans lequel, après avoir constaté l'absence de système de direction (20) dans le véhicule (1), lequel système de direction peut être commandé par l'intermédiaire de signaux de commande de direction (SL) générés de manière automatisée afin d'influencer de manière automatisée (ST0) un angle de direction (d) de roues (7) d'un essieu de véhicule (8) dirigé du véhicule (1), au moins les étapes suivantes sont exécutées :
- définition d'une trajectoire (P) entre une zone de départ (4) et une zone d'arrivée (5) définie dans l'enceinte fermée (2) (ST1) ;
- génération de signaux de commande d'entraînement (SA) et de signaux de commande de freinage de direction (SBL) de telle sorte que, lors d'une commande automatisée ultérieure du système d'entraînement (40) et du système de freinage (30) avec lesdits signaux de commande (SA, SBL), le véhicule (1) se déplace depuis la zone de départ (4) le long de la trajectoire (P) dans la zone d'arrivée (5) définie et l'angle de direction (d) varie (ST3) uniquement en raison d'une commande automatisée des freins (9) du système de freinage (30).

2. Procédé selon la revendication 1, **caractérisé en ce que** la trajectoire (P) est définie de telle sorte que l'angle de direction (d) au niveau des roues (7) de l'essieu de véhicule (8) dirigé reste inférieur à un angle de direction limite (dG) défini lors d'une commande automatisée du système de freinage (30) avec les signaux de commande de freinage de direction (SBL) pour le déplacement du véhicule (1) le long de la trajectoire (P).

3. Procédé selon la revendication 2, **caractérisé en ce que** l'angle de direction limite (dG) est de 20°.

4. Procédé selon l'une des revendications précédentes,
**caractérisé en ce que** la trajectoire (P) est définie par un système de gestion (3) de l'enceinte fermée (2) ou sur une unité de commande (10) dans le véhicule (1).

5. Procédé selon la revendication 4, **caractérisé en ce que** des informations de véhicule (11) concernant le véhicule (1) sont transmises au système de gestion (3) de l'enceinte fermée (2) pour la définition de la trajectoire (P) de sorte que le système de gestion (3) peut constater au préalable si un système de direction (20) pouvant être commandé de manière automatisée est présent dans le véhicule (1).

6. Procédé selon l'une des revendications précédentes,
**caractérisé en ce que,** lors de la définition de la trajectoire (P), le fait que l'angle de direction (d) au niveau des roues (7) de l'essieu de véhicule (8) dirigé peut être influencé uniquement par une commande automatisée des freins (9) du système de freinage (30) dans le véhicule (1) est pris en compte.

7. Procédé selon l'une des revendications précédentes,
**caractérisé en ce que** la trajectoire (P) et/ou la zone d'arrivée (5) sont définies en fonction d'obstacles (H) et/ou d'autres véhicules (100) dans l'enceinte fermée (2).

8. Procédé selon l'une des revendications précédentes, **caractérisé en ce que,** avant la commande automatisée du système d'entraînement (40) et du système de freinage (30) avec les signaux de commande (SA, SBL) (ST3), le fait de savoir si une masse de véhicule (M) du véhicule (1) est inférieure ou supérieure à une masse limite (MG) définie, par exemple 31 t, est vérifié.

9. Procédé selon la revendication 8, **caractérisé en ce qu'**une autorisation pour la génération automatisée du signal de commande de freinage de direction (SBL) et/ou pour la commande automatisée du système de freinage (30) du véhicule (1) avec le signal de commande de freinage de direction (SBL) est effectuée (STZ) uniquement si la masse de véhicule (M) est inférieure à la masse limite (MG).

10. Procédé selon l'une des revendications précédentes,
**caractérisé en ce que,** au moins pendant la commande automatisée du système de freinage (30) avec le signal de commande de freinage de direction (SBL), une température de freins (T9) d'au moins les freins (9) commandés de manière automatisée est surveillée, dans lequel une génération automatisée du signal de commande de freinage de direction (SBL) et/ou une commande automatisée du système de freinage (30) du véhicule (1) avec le signal de commande de freinage de direction (SBL) sont maintenues uniquement si la température de freins (T9) est inférieure à une valeur limite de température (TG).

11. Procédé selon l'une des revendications précédentes,
**caractérisé en ce qu'**une période de freinage de direction (tBL) est déterminée, laquelle indique pendant combien de temps une commande automatisée du système de freinage (30) avec le signal de commande de freinage de direction (SBL) est effectuée pour le parcours automatique de la trajectoire (P), dans lequel une génération automatisée du signal de commande de freinage de direction (SBL) et/ou une commande automatisée du système de freinage (30) du véhicule (1) avec le signal de commande de freinage de direction (SBL) sont maintenues uniquement jusqu'à ce que la période de freinage de direction (tBL) soit supérieure à une période limite (tG) définie.

12. Procédé selon l'une des revendications précédentes,
**caractérisé en ce que** le signal de commande de freinage de direction (SBL) est généré de telle sorte que les freins (9) sont commandés roue par roue lors d'une commande automatisée du système de freinage (30) avec ledit signal de commande de freinage de direction (SBL), de sorte qu'une pression de freinage différentielle (dP) entre les roues (7) du même essieu de véhicule (8) se forme, sur la base de laquelle en résulte un couple de direction (L), et un angle de direction (d) rattaché à la pression de freinage différentielle (dP) s'établit sur les roues (7) de l'essieu de véhicule (8) dirigé.

13. Procédé selon l'une des revendications précédentes,
**caractérisé en ce qu'**une rampe de chargement (5a) ou une aire de déchargement (15) ou un emplacement de stationnement (16) se trouve dans la zone d'arrivée (5).

14. Procédé selon l'une des revendications précédentes,
**caractérisé en ce que** le constat de la présence d'un système de direction (20) pouvant être commandé de manière automatisée dans le véhicule (1) est effectué dans la zone de départ (4) de l'enceinte fermée (2).

15. Unité de commande (10) pour un véhicule (1), en particulier pour la mise en œuvre d'un procédé selon l'une des revendications précédentes, dans laquelle l'unité de commande (10) est configurée pour commander de manière automatisée un système de freinage (30) et un système d'entraînement (40) dans le véhicule (1) afin de déplacer le véhicule (1) de manière automatisée le long d'une trajectoire (P) définie, dans laquelle l'unité de commande (10) est configurée pour générer des signaux de commande d'entraînement (SA) et des signaux de commande de freinage de direction (SBL) de telle sorte que, lors d'une commande automatisée du système d'entraînement (40) et du système de freinage (30) avec lesdits signaux de commande (SA, SBL), le véhicule (1) se déplace depuis la zone de départ (4) le long d'une trajectoire (P) définie au préalable dans la zone d'arrivée (5) définie et l'angle de direction (d) varie uniquement en raison d'une commande automatisée des freins (9) du système de freinage (30),
dans laquelle, lors de la définition de la trajectoire (P) entre une zone de départ (4) et une zone d'arrivée (5) définie dans l'enceinte fermée (2), le fait que l'angle de direction (d) au niveau des roues (7) de l'essieu de véhicule (8) dirigé peut être influencé uniquement par une commande automatisée des freins (9) du système de freinage (30) dans le véhicule (1) est pris en compte.

16. Unité de commande (10) selon la revendication 15, **caractérisée en ce que** l'unité de commande (10) est configurée pour déterminer par elle-même la trajectoire (P) ou pour recevoir la trajectoire (P) d'un système de gestion (3) de l'enceinte fermée (2).

17. Véhicule (1) comportant un système de freinage (30) et un système d'entraînement (40) et une unité de commande (10) selon la revendication 15 ou 16.
